(19) Europäisches Patentamt / European Patent Office / Office européen des brevets

(11) **EP 2 547 796 B1**

(12) **EUROPÄISCHE PATENTSCHRIFT**

(45) Veröffentlichungstag und Bekanntmachung des Hinweises auf die Patenterteilung:
**24.01.2018   Patentblatt 2018/04**

(21) Anmeldenummer: **11701962.0**

(22) Anmeldetag: **24.01.2011**

(51) Int Cl.:
**C21C 5/52** (2006.01)     **C10L 5/36** (2006.01)

(86) Internationale Anmeldenummer:
**PCT/EP2011/050880**

(87) Internationale Veröffentlichungsnummer:
**WO 2011/113632 (22.09.2011 Gazette 2011/38)**

(54) **BRIKETT ZUR ERZEUGUNG EINES SCHAUMSCHLACKE-EFFEKTS BEI DER EAF-TECHNOLOGIE DER EDELSTAHLHERSTELLUNG**

BRIQUETTE FOR PRODUCING A FOAMED SLAG EFFECT IN EAF TECHNOLOGY IN STAINLESS STEEL PRODUCTION

BRIQUETTE PERMETTANT D'OBTENIR UN EFFET DE LAITIER EXPANSÉ LORS DE LA PRODUCTION D'ACIERS SPÉCIAUX PAR LA TECHNOLOGIE DES FOURS ÉLECTRIQUES À ARC

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.06.2010   DE 102010022692**
**17.03.2010   DE 102010011712**

(43) Veröffentlichungstag der Anmeldung:
**23.01.2013   Patentblatt 2013/04**

(73) Patentinhaber: **SMS group GmbH**
**40237 Düsseldorf (DE)**

(72) Erfinder:
• **REICHEL, Johann**
  **40489 Düsseldorf (DE)**
• **ROSE, Lutz**
  **47259 Duisburg (DE)**

(74) Vertreter: **Klüppel, Walter et al**
**Hemmerich & Kollegen**
**Patentanwälte**
**Hammerstraße 2**
**57072 Siegen (DE)**

(56) Entgegenhaltungen:
WO-A1-2010/003401     DE-A1-102006 004 532
JP-A- 1 116 018       US-A- 3 525 604

**Beschreibung**

Die Erfindung betrifft ein Brikett zur Erzeugung einer Schaumschlacke auf Rostfreistahlschmelzen oder auf niedrig oder hochlegierten Stahlschmelzen in einem Elektrolichtbogenofen, enthaltend ein Gemisch aus Metalloxiden, Kalkstein, Kohlenstoff sowie ein Bindemittel, das in den Ofen eingegeben wird und sich dort so anordnet, dass unterhalb der Schlacke an der Metall-Schlackegrenze die Metalloxide durch den Kohlenstoff reduziert und der Kalkstein thermisch dissoziiert werden und die dabei entstehenden Gase durch Blasenbildung das Schlackenaufschäumen bewirken.

Beim Betreiben von Elektrolichtbogenöfen werden eingefüllte Fest-Materialien, vor allem Schrott und Legierungen mit den Lichtbögen der Elektroden, die von oben in das Ofengefäß ragen, aufgeschmolzen. Hierbei erfüllt die Schlacke neben ihrer Primärfunktion, der Entfernung von unerwünschten Bestandteilen aus der Schmelze, eine Schutzfunktion, da sie den Raum zwischen den Elektrodenenden und der Metalloberfläche teilweise ausfüllt und die Feuerfest-Ausmauerung des Ofens vor der Strahlungsenergie des Elektrolichtbogens schützt. Diese Schutzfunktion der Schlacke lässt sich dadurch verbessern, dass durch geeignete Verfahren ein Aufschäumen der Schlacke herbeigeführt wird. Das Schäumen der Schlacke ist bei der Stahlherstellung in einem Elektrolichtbogenofen einer der entscheidenden Verfahrensabläufe, die sich auf die Erhöhung der Effektivität der Stahlproduktion und eine Verringerung der Produktionskosten auswirken.

Bei der Herstellung von Standard - Kohlenstoffstählen ist dies deshalb eine allgemein angewandte Methode. Anders sieht es aber aus, wenn dieses Schäumen auf Stähle mit hohem Chromgehalt angewandt werden soll, weil die signifikante Aufnahme von Chromoxid durch die Schlacke Probleme aufwirft. Dies ergibt sich aus den physikalisch-chemischen Eigenschaften von Schlacken mit hohem Chromoxidgehalt.

Es sind zwar Methoden zum Aufschäumen von Schlacken mit hohem Chromoxidgehalt bekannt, die aber alle nicht befriedigend sind. So wird in der EP 0 829 545 B1 ein Verfahren zur Herstellung einer Schaumschlacke auf schmelzflüssigem rostfreiem Stahl in einem Elektroofen vorgeschlagen, wobei in die Schlacke ein Pulver mit Hilfe eines Injektionsmediums, beispielsweise Stickstoff, eingeführt wird, das sich aus einem Metalloxid, entweder Zinkoxid oder Bleioxid, und Kohlenstoff zusammensetzt. Das in dem Pulver enthaltene Oxid wird reduziert, indem es mit dem Kohlenstoff reagiert. Hierbei werden in der Schlacke Blasen gebildet, die im Wesentlichen aus Kohlenmonoxid bestehen und die die Schlacke aufschäumen lassen. Aufgrund der mit der Pulverform verbundenen relativ großen Oberfläche kommt es zu einer kurzen, heftigen Reaktion mit der Schlacke, die zudem örtlich begrenzt in der Nähe der Einspritz- bzw. der Einblasvorrichtung im Schmelzbad stattfindet.

Um die Nachteile des Einbringens von pulverförmigen Stoffen zu vermeiden, wird in der WO 2004/104232 vorgeschlagen, die zum Aufschäumen der Schlacke verwendeten Materialien, ein Gemisch aus Metalloxid und Kohlenstoff, als gepresste Formteile in den Elektroofen zu chargieren. Die Dichte dieser Formteile ist dabei so eingestellt, dass sie in der Schlacke und hier vorzugsweise nahe der Phasengrenze Schmelze/Schlacke schwimmen.

Um einen unerwünschten Wertstoffverlust bei hohem Chromoxidgehalt in der Schlacke zu minimieren, wird in der WO 2008/095575 A1 vorgeschlagen, die aus einem definierten Gemisch aus einem Eisenträger als Balastmaterial, aus Kohlenstoff bzw. Kohlenstoff und Silizium als Reduktionsmittel sowie einem Bindematerial bestehenden Pellets bzw. Briketts so in den Elektrolichtbogenofen zu chargieren, dass sie unter der Schlackenschicht chemisch mit den Metalloxiden der Schlacke, insbesondere mit dem enthaltenden Chromoxid, reduzierend reagieren, wobei die entstehenden Reaktionsgase, hauptsächlich Kohlenmonoxid, ein Schlackeaufschäumen unterstützen

Weiterhin wird in der WO 2010/003401 A1 ein Verfahren zur Erzeugung von Schaumschlacke beschrieben, mit dem das Schäumen einer Schlacke mit hohem Chromoxid Gehalt erreicht werden kann. Kern dieses Verfahrens ist dabei, dass das Material Eisenoxid-Träger, Kohlenstoffträger, hoch Kohlenstoff haltiges Ferrochrom und/oder Schrott oder Nickeloxid (außer ferritischem Stahl) als Beimischung sowie Kalkstein und eventuell zusätzlich Flussspat, Binder wie Melasse und/oder Zement und zusätzlichen Gaslieferer für den Schäumprozess enthält. Dieses Material soll in Brikettform oder als Pellets mit unterschiedlicher Größe vorliegen. Das in Form von Formteilen, wie Briketts oder Pellets zu chargierende Gemisch enthält als Grundkomponenten

- Eisenoxid ($Fe_2O_3$, $Fe_3O_4$) in jeder Form als Zunder, Konverter- oder EAF/LF-Trockenstaub, Konverter-Nassstaub (Schlamm),

- Koks, Graphit, Kohlenstoff (C)

- Ballastmaterial für alle rostfreien Stahlsorten in Form von FeCr, ferritischem Schrott Ballastmaterial für rostfreie austenitische und Duplex-Stahlsorten in Form von FeCr, ferritischem Schrott, austenitischem Schrott, Duplexschrott, Nickeloxiden ($NiO_x$)

- Kalkstein ($CaCO_3$), Kalk oder Flussspat (CaO oder $CaF_2$)

- Al-Oxide ($Al_2O_3$)

- Bindemittel in Form von Melasse, Zement oder ein anderes Bindemittel.

Es ist Aufgabe der Erfindung, für die Erzeugung von Schaumschlacke mit hohem Chromoxid-Gehalt, die insbesondere nach dem Verfahren der WO 2010/003401 A1 durchgeführt wird, geeignete Briketts für die Verwendung bei RostfreiStahlschmelzen oder bei niedrig oder hochlegierten Stahlschmelzen bereitzustellen, wobei alle zu berücksichtigenden Briketteigenschaften sowie alle zur Brikettherstellung geeignete Materialien in Form einer Matrix zusammengestellt sind.

Die gestellte Aufgabe wird mit den kennzeichnenden Merkmalen des Anspruch 1 dadurch gelöst, dass das Brikett für seine Verwendung bei unterschiedlichen Schmelzen wie Rostfreistahl, niedriglegiertem Stahl oder hochlegiertem Stahl aus definierten beliebigen Mischungen einzelner oder mehrerer Stoffe der folgenden Grundkomponenten zusammengesetzt ist:

| | |
|---|---|
| $O_2$-Träger | Staub, Schlamm oder Schlacke mit $\geq$ 10 % $FeO/Fe_2O_3$, |
| | Staub, Schlamm oder Schlacke mit $\geq$ 1 % $Cr_2O_3$, |
| | Staub, Schlamm oder Schlacke mit $\geq$ 1 % MnO, |
| | Staub, Schlamm oder Schlacke mit $\geq$ 1 % NiO, |
| | Zunder mit $\geq$ 10 % $FeO/Fe_2O_3$, |
| Gas-Träger | Staub mit $\geq$ 40 % $CaCO_3$, |
| Dichtegestalter | Staub mit FeCr, |
| | Staub mit Fe / niedriglegierter Feinschrott, |
| | Staub mit Cr / ferritischer Feinschrott, |
| | Staub mit Ni / austenitischer Feinschrott/Schleifstaub, |
| | Staub mit Mn / ferritischer bzw. niedriglegierter Feinschrott, |
| Reduktionsmittel | kohlenstoffhaltige Stoffe $\geq$ 90 % C, |
| | Staub oder Feingranulat von Koks, Kohle oder Graphit, |
| Bindestoff | Melasse, Zement, $Ca(OH)_2$ (Löschkalk), jeweils $\leq$ 5 %. |

Vorteilhafte Ausgestaltungen der Erfindung ergeben sich aus den Unteransprüchen.

Die Anwendung des Schäumens der Schlacke bei der EAF-Metallurgie ergibt eine Reihe von Vorteilen wie eine Verbesserung des thermischen Wirkungsgrades des Ofens aufgrund der geringen Wärmeleitfähigkeit des Schaumes, des geringeren Verbrauchs an Feuerfestmaterial und Elektroden und der Stabilisierung des Lichtbogens und des Geräuschpegels.

Um ein effektives Schäumen zu erreichen, muss eine hohe Gasentstehung an der Phasengrenze Metall-Schlacke bewirkt werden. Die dominierenden Faktoren sind dabei als Schaum erzeugendes Gas CO sowie $CO_2$. Diese Gase entstehen bei der Eisenoxid- und Chromoxid-Reduktion und der thermischen Zersetzung des Kalksteins in folgender Weise:

$$Fe_2O_3 + 3C = 2Fe + 3CO \qquad (1)$$

$$FeO + C = Fe + CO \qquad (2)$$

$$Cr_2O_3 + 3C = 3CO + 2Cr \qquad (3)$$

$$CrO + C = Cr + CO \qquad (4)$$

$$CaCO_3 = CaO + CO_2 \qquad (5)$$

Bei diesen Reaktionen ist der Reduktionsgrad des Eisenoxids durch den Kohlenstoff sehr hoch, während die Reduktion von Chromoxid durch den Kohlenstoff weniger effektiv ist.

Es sei erwähnt, dass die Schlacken bei der Herstellung von rostfreiem Stahl sehr wenig Eisenoxide enthalten aber viel Chromoxide, so dass der geringe Wirkungsgrad der CO-Erzeugung in derartigen Schlacken verständlich ist. Eine effektivere Gaserzeugung mag erreichbar sein durch die gezielte Zugabe von synthetischen Materialien, wie Zunder und Kalkstein.

Für die Schaumentwicklung spielt die spez. Dichte der Zusätze eine wichtige Rolle, und zwar verglichen mit der der Schlacke bzw. des Metalls. Sie trägt dazu bei, die Gaserzeugungsreaktion an die Schlacke/Metall-Grenzschicht zu bringen, so dass die Schaumbildung wirkungsvoller und besser kontrollierbar wird.

Beeinflussbar ist die Dichte durch die geeignete Auswahl von sehr dichten Materialien (Metallen) so genannten Ballastmaterialien wie ferritischer Schrott und/oder Ferrochrom sowie weniger dichten Materialien (Oxiden).

Die Hauptkomponente bei den Schaumbildnern ist das Eisenoxid, $Fe_2O_3$, mit einem Zusatz von Kohlenstoff als Reduktionsmittel. Dabei läuft folgende Reaktion ab:

$$Fe_2O_3 + 3\,C = 2\,Fe + 3\,CO \qquad (6)$$

wobei das Schaumgemisch aus $Fe_2O_3$ und Graphit 18,37 % Graphit und als Rest 81,63 % $Fe_2O_3$ enthält.

Die Zusammensetzung wird durch Ferrochrom (FeCr) mit hohem Chromgehalt, ferritischem Schrott sowie Kalkstein $CaCO_3$ vervollständigt werden.

Im Fall von Schlacken der austenitischen Stähle kann auch Nickeloxid zugesetzt werden.

Ferrochrom und ferritischer Schrott machen, aufgrund der hohen spez. Dichte - den schaumbildenden Zusatz schwerer. Die spezifische Dichte liegt dadurch zwischen den spezifischen Dichten der Schlacke und des Metalls entsprechend:

$$\rho_{\text{Schlacke}} < \rho_{\text{Material}} < \rho_{\text{Metall}} \qquad (7)$$

Dadurch wird das Material durch die Auftriebskraft gezielt an der Phasengrenze Schlacke-Metall plaziert. Dabei löst es sich in dem Metallbad, wodurch das Badgewicht steigt.

Durch Kalkstein wird bei der thermischen Zersetzung $CO_2$ erzeugt, das das Schäumen unterstützt, während Kalziumoxid sich in der Schlacke löst und die Viskosität und die Basizität der Schlacke anhebt. Zusätzlich kann die Schlackenviskosität auch durch die Zugabe von Flussspat ($CaF_2$) eingestellt werden.

Der erfindungsgemäße Schaumbildner besteht aus Grundbestandteilen, wie

* Eisenoxiden ($Fe_2O_3$, $Fe_3O_4$) in jeder Form als Zunder, Konverter- oder EAF/LF-Trockenstaub, Konverter-Nassstaub (Schlamm), Erz

* Koks, Graphit, Kohlenstoff (C)

* Ballastmaterial für alle rostfreien Stahlsorten in Form von FeCr, ferritischem Schrott

* Ballastmaterial für rostfreie austenitische und Duplex Stahlsorten in Form von FeCr, ferritischem Schrott, austenitischem Schrott, Duplexschrott, Nickeloxiden ($NiO_x$).

Zu den Zusatzstoffen gehören:

* Kalkstein ($CaCO_3$)

* Kalk und Flussspat (CaO und $CaF_2$)

* Al-Oxide ($Al_2O_3$).

Als Bindemittel:

* Melasse

* Zement

* oder andere mögliche Binder.

Die Zusammensetzung des Briketts lässt sich wie folgt angeben:

| | |
|---|---|
| $Fe_2O_3$, $Fe_3O_4$ | 10 - 70 in % |
| C | 2 - 16 in % |

(fortgesetzt)

| | |
|---|---|
| Balastmaterial | 14 - 78 in % |
| $CaCO_3$ | 0 - 10 in % |
| | |
| $CaO, CaF_2$ | 0 - 10 in % |
| $Al_2O_3$ | 0 - 10 in % |

Die nachfolgenden Annahmen dienen zur Bestimmung der spez. Dichte des Schaumbildners, wobei $Fe_2O_{3,m}$ verstanden wird als Mischung von $Fe_2O_3$ mit Graphit

* Die spez. Dichte des $Fe_2O_{3,m}$ wird durch die Formel angegeben:

$$\rho_{Fe_2O_3m} = \rho_{Fe_2O_3} \cdot \frac{\%_{Fe_2O_3}}{100\%} + \rho_C \cdot \frac{\%_C}{100\%} \qquad (8)$$

die des Schaumbildners :

$$\rho = \rho_{Fe_2O_3,m} \cdot \frac{\%_{Fe_2O_3,m}}{100\%} + \rho_{Balast} \cdot \frac{\%_{Balast}}{100\%} + \rho_{CaCO_3} \cdot \frac{\%_{CaCO_3}}{100\%} + \rho_{Binders} \frac{\%_{Binder}}{100\%} \qquad (9)$$

wobei Ballast bedeutet FeCr oder Schrott sowie Nickeloxid
*

$$\%_{Fe_2O_3,m} + \%_{Balast} + \%_{CaCO_3} + \%_{Binder} = 100\% \qquad (10)$$

* Der $CaCO_3$ Gehalt kann ersetzt werden durch $CaF_2$ Gehalte, wobei man insbesondere annehmen kann % $CaCO_3$ = 0 oder $CaF_2$ = 0.

Die spez. Dichte des Schaumbildners ergibt sich aus der nachfolgenden Tabelle1.

Tabelle 1

*Spez. Dichte der reinen, monolithischen Schaumbildnerkomponenten,*

*die für die Dichtebestimmung des Materials benutzt werden*

| Komponente | Fe | Cr | $Fe_2O_3$ | C | $CaCO_3$ | $CaF_2$ | FeCr (*) |
|---|---|---|---|---|---|---|---|
| Spez. Dichte, $[t/m^3]$ | 7.86 | 7.2 | 5.3 | 2.25 | 2.27 | 3.18 | 4.09 |

* 54%Cr-35%Fe-8%C-3%Si

| Komponente | Melasse | Zement | ferrit. Schrott | NiOx | | | |
|---|---|---|---|---|---|---|---|
| Spez. Dichte, $[t/m^3]$ | 0,99 | 2,9 | 6,51 | 6,67 | | | |

Die angegebenen Daten für die spez. Dichte beziehen sich auf monolithisches Material. Andererseits wird das zur Schaumbildung benutzte Material in Form von Briketts angewandt, dessen spez. Dichte natürlich geringer ist.

Die Briketts werden durch Pressen des Materials hergestellt, abhängig von der prozentualen Zusammensetzung werden unterschiedliche Dichten erhalten.

Die spez. Dichte von bei der Stahlherstellung erzeugten Schlacken liegt im Bereich von 2,5 bis 3 $g/cm^3$.

Eine gepresste Zusammensetzung, die $Fe_2O_3$ und Kohlenstoff in dem genannten Gemisch enthält, hat in der Praxis eine Dichte von 3,2 $g/cm^3$ , während sich rechnerisch für die individuellen Komponenten eine Dichte von 4,7 $g/cm^3$ ergibt. Für die berücksichtigte Schlacke hat sich experimentell eine Dichte von 2,9 $g/cm^3$ ergeben.

Aus Sicht der gewünschten Schaumbildungseffekte sollte die spez. Diche des Schaumbildners in einem Berich von 2,8 - 6,0 $t/m^3$ liegen.

Bei geringen geometrischen Abmessungen für die Zusätze (Pellets oder Briketts) wird das Gas schnell freigesetzt, da die Reaktionsfläche insgesamt bei kleineren Abmessungen größer ist.

Es wurde bereits dargelegt, dass die schaumbildende Mischung in Form von Briketts oder Pellets zugegeben werden sollte. Dabei werden die Briketts in einer besonders gestalteten Presse erzeugt. Als vorteilhaft haben sich für die Briketts Abmessungen ergeben, die für die Diagonale bei 20 - 100 mm und die Höhe bei 15 - 40 mm liegen.

Die Pellets oder Briketts können vor dem Pressen in einer Trommel unter Zugabe von Melasse oder Zement hergestellt werden, wobei aber auch andere Bindetechniken möglich sind, die sicherstellen, dass die gewünschten Eigenschaften hinsichtlich Härte, Bruch- und Druckfestigkeit erreicht werden.

Die durch Pressen hergestellten Briketts besitzen bei einem Brikettvolumen von ≤ 800 $cm^3$ eine diagonale Erstreckung zwischen 20 und 100 mm und eine Höhe zwischen 15 bis 40 mm und sind variabel als Ellipsoid, als Sechskantquader, als Quader oder als Zylinder ausgebildet.

In der Tabelle 2 sind die aus dem vorstehend Gesagten sich ergebenden möglichen Zusammensetzungen der herstellbaren Briketts sowie die hierbei verwendbaren Materialien in Form einer Matrix zusammengefasst.

Danach können die Briketts zur Verwendung bei der Schaumschlackenerzeugung für Rostfreistahl wahlweise aus allen angeführten Stoffen 1 bis 26 der in der Tabelle 2 genannten Grundkomponenten zusammengesetzt sein.

Zur Verwendung bei der Schaumschlackenerzeugung für niedriglegierten Stahl oder hochlegierten Stahl enthalten die Briketts als O2-Träger nur Mischungen aus Staub, Schlamm, Schlacke oder Zunder mit jeweils $\geq$ 10 % FeO/Fe$_2$O$_3$ und als Dichtegestalter nur Mischungen aus Staub mit Fe / niedriglegiertem Feinschrott und Staub mit Mn / ferritischem bzw. Niedriglegiertem Feinschrott.

Ein in allen Schmelzen zusätzlich einsetzbares Kalksteinbrikett enthält als reiner Gasträger keine Stoffe der Grundkomponente O$_2$-Träger.

Die physikalischen Eigenschaften der nach dieser Tabelle 2 hergestellten möglichen Briketts liegen dann in folgenden Bereichen:

- die CO/CO$_2$ - Gasentwicklung beträgt bei Normalzustand (20 °C, 1 bar) $\geq$ 0,15 Nm$^3$/kg Brikett,
- die Brikettdichte beträgt zwischen 2,5 und 7,0 g/cm$^3$,
- nach 24 h Trocknung und bei $\leq$ 4 % Feuchtigkeit beträgt die Druckfestigkeit der Briketts $\geq$ 0,5 N/mm$^2$ und die Zerfallfestigkeit von 2 m auf eine 120 mm dicke Platte ist $\geq$ 97 %.

Tabelle 2

| | | Material O2-Träger Einzelkomponent oder im beliebigen Gemisch mit 1-26. | Brikett Rostfreistahl | Brikett niedriglegierter Stahl | Brikett hochlegierterStahl | Kalksteinbrikett |
|---|---|---|---|---|---|---|
| | 1. | Staub FeO/Fe2O3$\geq$10% | X | X | X | |
| | 2. | Staub Cr2O3$\geq$ 1% | X | | | |
| | 3. | Staub MnO$\geq$ 1% | X | | | |
| | 4, | Staub NiO$\geq$ 1% | X | | | |
| | 5. | Zunder FeO/Fe2O3$\geq$ 10% | X | X | X | |
| | 6. | Schlamm FeO/Fe2O3$\geq$ 10% | X | X | X | |
| | 7, | Schlamm Cr2O3$\geq$ 1% | X | | | |
| | 8. | Schlamm MnO$\geq$ 1% | X | | | |
| | 9. | Schlamm NIO$\geq$ 1% | X | | | |
| | 10. | Schlacke FeO/Fe2O3$\geq$ 10% | X | X | X | |
| | 11. | Schlacke Cr2O3$\geq$ 1% | X | | | |
| | 12. | Schlacke MnO$\geq$ 1%. | X | | | |
| | 13, | Schlacke NiO$\geq$ 1%. | X | | | |
| | | Material Gas-Träger Einzelkomponent oder im beliebigen Gemisch mit 14.-19, und 24.-26. | | | | |
| | 14. | Staub Kalkstein CaCO3$\geq$ 40% | | | | X |
| | | Material Dichtegestalter Einzelkomponent oder im bellebigen Gemisch mit 1.-26. | | | | |
| | 15. | Staub FeCr | X | | | |
| | 16. | Staub Fe /Niedrigleglerter Feinschrott | X | X | X | X |
| | 17. | Staub Cr/Ferritischer Feinschrott | X | | | X |
| | 18. | Staub Ni/ Austenitischer Feinschrott/ Schleifstaub | X | | | X |
| | 19. | Staub Mn/ Ferritischer bzw. Niedriglegierter Feinschratt | X | X | X | X |

(fortgesetzt)

| | Material O2-Träger Einzelkomponent oder im beliebigen Gemisch mit 1-26. | Brikett Rostfreistahl | Brikett niedriglegierter Stahl | Brikett hochlegierterStahl | Kalksteinbrikett |
|---|---|---|---|---|---|
| | Reduktor Einzelkomponent oder im beliebigen Gemisch mit 1.-26. | | | | |
| 20. | Kohlenstoffhaltige Stoffe ≥ 90% | X | X | X | X |
| 21. | Koks (Staub, Feingranulot) | X | X | X | X |
| 22. | Kohle (Staub, Feingranulat) | X | X | X | X |
| 23. | Graphit (Staub, Feingranulat) | X | X | X | X |
| | Bindestoff Einzelkomponent oder im beliebigen Gemisch mit 1.-26. | | | | |
| 24. | Melasse ≤ 5% | X | X | X | X |
| 25, | Zement ≤ 5% | X | X | X | X |
| 26, | Kalziumhydroxid (Löschkalk) ≤ 5% | X | X | X | X |

## Patentansprüche

1.  Brikett zur Erzeugung einer Schaumschlacke auf Rostfreistahlschmelzen in einem Elektrolichtbogenofen, enthaltend ein Gemisch aus Metalloxiden, Kalkstein, Kohlenstoff sowie ein Bindemittel, das in den Ofen eingegeben wird und sich dort so anordnet, dass unterhalb der Schlacke an der Metall-Schlackegrenze die Metalloxide durch den Kohlenstoff reduziert und der Kalkstein thermisch dissoziiert werden und die dabei entstehenden Gase durch Blasenbildung das Schlackenaufschäumen bewirken, **dadurch gekennzeichnet, dass** das Brikett für seine Verwendung bei unterschiedlichen Schmelzen wie Rostfreistahl, niedriglegiertem Stahl oder hochlegiertem Stahl aus definierten beliebigen Mischungen einzelner oder mehrerer Stoffe der folgenden Grundkomponenten zusammengesetzt ist:

    | | |
    |---|---|
    | $O_2$-Träger | Staub, Schlamm oder Schlacke mit ≥ 10 % $FeO/Fe_2O_3$, |
    | | Staub, Schlamm oder Schlacke mit ≥ 1 % $Cr_2O_3$, |
    | | Staub, Schlamm oder Schlacke mit ≥ 1 % MnO, |
    | | Staub, Schlamm oder Schlacke mit ≥ 1 % NiO, |
    | | Zunder mit ≥ 10 % $FeO/Fe_2O_3$, |
    | Gas-Träger | Staub mit ≥ 40 % $CaCO_3$, |
    | Dichtegestalter | Staub mit FeCr, |
    | | Staub mit Fe / niedriglegierter Feinschrott, |
    | | Staub mit Cr / ferritischer Feinschrott, |
    | | Staub mit Ni / austenitischer Feinschrott/Schleifstaub, |
    | | Staub mit Mn / ferritischer bzw. niedriglegierter Feinschrott, |
    | Reduktionsmittel | kohlenstoffhaltige Stoffe ≥ 90 % C, |
    | | Staub oderFeingranulat von Koks, Kohle oder Graphit, |
    | Bindestoff | Melasse, Zement, $Ca(OH)_2$ (Löschkalk), jeweils ≤ 5 %. |

2.  Brikett nach Anspruch 1, **dadurch gekennzeichnet, dass** das Brikett zur Verwendung bei der Schaumschlackenerzeugung für Rostfreistahl wahlweise aus allen Stoffen der genannten Grundkomponenten zusammengesetzt ist.

3.  Brikett nach Anspruch 1, **dadurch gekennzeichnet, dass** das Brikett zur Verwendung bei der Schaumschlackenerzeugung für niedriglegierten Stahl oder hochlegierten Stahl als $O_2$-Träger nur Mischungen aus Staub, Schlamm, Schlacke oder Zunder mit jeweils ≥ 10 % $FeO/Fe_2O_3$ und als Dichtegestalter nur Mischungen aus Staub mit Fe / niedriglegiertem Feinschrott und Staub mit Mn / ferritischem bzw. niedriglegiertem Feinschrott enthält.

**4.** Brikett nach Anspruch 1, **dadurch gekennzeichnet, dass** ein in allen Schmelzen zusätzlich einsetzbares Kalksteinbrikett als reiner Gasträger keine Stoffe der Grundkomponente $O_2$-Träger enthält.

**5.** Brikett nach einem oder mehreren der Ansprüche 1 bis 5, **dadurch gekennzeichnet, dass** die $CO/CO_2$ - Gasentwicklung bei Normalzustand (20 °C, 1 bar) $\geq$ 0,15 Brikett beträgt.

**6.** Brikett nach Anspruch 6, **dadurch gekennzeichnet, dass** die Brikettdichte zwischen 2,5 und 7,0 $g/cm^3$ beträgt.

**7.** Brikett nach Anspruch 6 oder 7, **dadurch gekennzeichnet, dass** nach 24 h Trocknung und bei $\leq$ 4 % Feuchtigkeit die Druckfestigkeit des Briketts $\geq$ 0,5 $N/mm^2$ und die Zerfallfestigkeit von 2 m auf eine 120 mm dicke Platte $\geq$ 97 % beträgt.

**8.** Brikett nach Anspruch 6, 7 oder 8, **dadurch gekennzeichnet, dass** das Brikett, dessen diagonale Erstreckung zwischen 20 und 100 mm und dessen Höhe zwischen 15 bis 40 mm liegt, mit einem Brikettvolumen von $\leq$ 800 $cm^3$ variabel als Ellipsoid, als Sechskantquader, als Quader oder als Zylinder ausgebildet ist.

## Claims

**1.** Briquette for producing a foamed slag on stainless steel melts in an electric arc furnace, containing a mixture of metal oxides, limestone, carbon and a binder, which is charged into the furnace and so arranged therein that below the slag at the metal/slag interface the metal oxides are reduced by the carbon and the limestone thermally dissociated and the resulting gases through formation of bubbles cause foaming of the slag, **characterised in that** the briquette for use thereof in different melts such as stainless steel, low-alloyed steel or high-alloyed steel is composed of defined desired mixtures of individual or multiple substances of the following basic components:

| | |
|---|---|
| $O_2$ carrier | dust, slurry or slag with $\geq$ 10% $FeO/Fe_2O_3$, |
| | dust, slurry or slag with $\geq$ 1% $Cr_2O_3$, |
| | dust, slurry or slag with $\geq$ 1% MnO, |
| | dust, slurry or slag with $\geq$ % NiO, |
| | scale with $\geq$ 10% $FeO/Fe_2O_3$, |
| gas carrier | dust with $\geq$ 40% $CaCO_3$, |
| density former | dust with FeCr, |
| | dust with Fe / low-alloyed fine scrap, |
| | dust with Cr / ferritic fine scrap, |
| | dust with Ni / austentic fine scrap / sanding dust, |
| | dust with Mn / ferritic or low-alloyed fine scrap, |
| reducing agent | carbon-containing substances $\geq$ 90% C, |
| | dust or fine granulate of coke, coal or graphite, |
| binder | molasses, cement, $Ca(OH)_2$ (calcium hydrate), each $\leq$ 5% |

**2.** Briquette according to claim 1, **characterised in that** the briquette for use in producing foamed slag for stainless steel is selectably composed from all substances of the said basic components.

**3.** Briquette according to claim 1, **characterised in that** the briquette for use in producing foamed slag for low-alloyed steel or high-alloyed steel contains as $O_2$ carrier only mixtures of dust, slurry, slag or scale each with $\geq$ 10% $FeO/Fe_2O_3$ and as density former only mixtures of dust with Fe / low-alloyed fine scrap and dust with Mn / ferritic or low-alloyed fine scrap.

**4.** Briquette according to claim 1, **characterised in that** a limestone briquette additionally usable as pure gas carrier in all melts contains no substances of the basic component $O_2$ carrier.

**5.** Briquette according to one or more of claims 1 to 4, **characterised in that** the $CO/CO_2$ development of gas in normal state (20° C, 1 bar) is $\geq$ 0.15 briquette.

6. Briquette according to claim 5, **characterised in that** the briquette density is between 2.5 and 7.0 g/cm$^3$.

7. Briquette according to claim 5 or 6, **characterised in that** after 24 hours drying and at $\leq$ 4% moisture the pressure resistance of the briquette is $\geq$ 0.5 N/mm$^2$ and the resistance to disintegration of 2 m on a 120 mm thick plate is $\geq$ 97%.

8. Briquette according to claim 5, 6 or 7, **characterised in that** the briquette, the diagonal dimension of which is between 20 and 100 mm and the height of which is 15 to 40 mm, with a briquette volume of $\leq$ 800 cm$^3$ is variably constructed as an ellipsoid, as a hexagon block, as a parallelepiped or as a cylinder.

**Revendications**

1. Briquette pour l'obtention d'un laitier mousseux sur des bains d'acier inoxydable dans un four électrique à arc, contenant un mélange d'oxydes métalliques, de calcaire, de carbone et d'un liant qui est introduit dans le four et qui s'y dispose d'une manière telle qu'en dessous du laitier, à la limite entre le métal et le laitier, les oxydes métalliques sont réduits par le carbone et le calcaire est soumis à une dissociation thermique, et les gaz qui en résultent déclenchent, via la formation de bulles, la transformation du laitier en mousse, **caractérisée en ce que** la briquette, pour son utilisation dans différentes masses fondues telles que de l'acier inoxydable, de l'acier faiblement allié ou de l'acier fortement allié, est constitué par n'importe quels mélanges définis de substances individuelles ou de plusieurs substances des composants de base indiqués ci-après :

   des transporteurs de $O_2$ :

   - des poussières, des boues ou des scories avec $\geq$ 10 % de FeO/Fe$_2$O$_3$ ;
   - des poussières, des boues ou des scories avec $\geq$ 1 % de Cr$_2$O$_3$ ;
   - des poussières, des boues ou des scories avec $\geq$ % de MnO ;
   - des poussières, des boues ou des scories avec $\geq$ 1 % de NiO ;
   - de la calamine avec $\geq$ 10 % de FeO/Fe$_2$O$_3$ ;

   des transporteurs de gaz :

   - des poussières avec $\geq$ 40 % de CaCO$_3$ ;

   des formateurs de la masse volumique :

   - des poussières avec du FeCr ;
   - des poussières avec du Fe / de la fine ferraille faiblement alliée ;
   - des poussières avec du Cr / de la fine ferraille ferritique ;
   - des poussières avec du Ni / de la fine ferraille austénitique / des poussières de ponçage ;
   - des poussières avec du Mn / de la fine ferraille ferritique, respectivement faiblement alliée ;

   des agents de réduction :

   - des substances carbonées avec $\geq$ 90 % de C ;
   - des poussières ou des granulés fins de coke, de charbon ou de graphite ;

   un liant :

   - de la mélasse, du ciment, du Ca(OH)$_2$ (de la chaux éteinte), respectivement $\leq$ 5 %.

2. Briquette selon la revendication 1, **caractérisée en ce que** la briquette, pour son utilisation dans le cas de la génération de laitier mousseux pour de l'acier inoxydable, est constituée de manière facultative par toutes les substances des composants de base mentionnés.

3. Briquette selon la revendication 1, **caractérisée en ce que** la briquette, pour son utilisation dans le cas de la génération de laitier mousseux pour de l'acier faiblement allié ou de l'acier fortement allié, ne contient, à titre de transporteurs d'oxygène, que des mélanges de poussières, de boues, de laitier ou de calamine avec respectivement $\geq 10\%$ de $FeO/Fe_2O_3$, et à titre de formateurs de la masse volumique, uniquement des mélanges de poussières avec du Fe / de la fine ferraille faiblement alliée et de poussières avec du Mn / de la fine ferraille ferritique, respectivement faiblement alliée.

4. Briquette selon la revendication 1, **caractérisée en ce qu'**une briquette de calcaire que l'on peut utiliser en outre dans toutes les masses fondues ne contient, à titre de transporteur de gaz pur, aucune substance du composant de base transporteur de $O_2$.

5. Briquette selon une ou plusieurs des revendications 1 à 5, **caractérisée en ce que** le dégagement de gaz $CO/CO_2$ s'élève, à l'état normal (20 °C, 1 bar) $\geq 0,15$ de briquette.

6. Briquette selon la revendication 6, **caractérisée en ce que** la masse volumique de la briquette se situe entre 2,5 et 7,0 $g/cm^3$.

7. Briquette selon la revendication 6 ou 7, **caractérisée en ce que**, après séchage pendant 24 heures et dans des conditions d'humidité $\leq 4\%$, la résistance de la briquette à la pression est $\geq 0,5$ $N/mm^2$ et la résistance à la décomposition de 2 m sur une plaque possédant une épaisseur de 120 mm est $\geq 97\%$.

8. Briquette selon la revendication 6, 7 ou 8, **caractérisée en ce que** la briquette, dont l'étendue diagonale se situe entre 20 et 100 mm et dont la hauteur se situe entre 15 et 40 mm, avec un volume de briquette $\leq 800$ $cm^3$, est réalisée de manière variable sous la forme d'un ellipsoïde, sous la forme d'un hexagone, sous la forme d'un parallélépipède ou sous la forme d'un cylindre.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0829545 B1
- WO 2004104232 A
- WO 2008095575 A1
- WO 2010003401 A1